# EUROPÄISCHE PATENTSCHRIFT

(11) **EP 1 587 366 B1**
(45) Veröffentlichungstag und Bekanntmachung des Hinweises auf die Patenterteilung: **29.12.2010**
(21) Anmeldenummer: 03788960.7
(22) Anmeldetag: 22.10.2003
(51) Int. Cl.: A01N 25/30, A01N 57/20

(54) **PESTIZIDFORMULIERUNGEN ENTHALTEND ALKOXYLIERTE AMINE**
PESTICIDE FORMULATIONS CONTAINING ALKOXYLATED AMINES
FORMULATIONS DE PESTICIDES CONTENANT DES AMINES ALCOXYLEES

(30) Priorität: 30.10.2002 DE 10250552
(43) Veröffentlichungstag der Anmeldung: 26.10.2005
(73) Patentinhaber: Clariant Produkte (Deutschland) GmbH, 65929 Frankfurt am Main (DE)
(72) Erfinder: SCHERL, Franz, Xaver, 84508 Burgkirchen (DE); HESS, Joachim, 65719 Hofheim (DE); ZERRER, Ralf, 63791 Karlstein (DE)
(86) Internationale Anmeldenummer: PCT/EP2003/011698
(87) Internationale Veröffentlichungsnummer: WO 2004/039154

(56) Entgegenhaltungen:
- EP-A- 0 417 896
- WO-A-02/43492
- WO-A-96/32839
- DE-A- 4 019 362
- DATABASE WPI Section Ch, Week 198523 Derwent Publications Ltd., London, GB; Class A25, AN 1985-138929 XP002270129 & JP 60 075324 A (NEOS KK), 27. April 1985 (1985-04-27)

## Beschreibung

Die Erfindung betrifft Zusammensetzungen enthaltend Pestizide, insbesondere Mittel zur Verbesserung der Wirkung der biologischen Aktivität von Pflanzenschutzmitteln (Akarizide, Bakterizide, Fungizide, Herbizide, Insektizide, Molluskide, Nematizide und Rodentizide).

Pflanzenschutzmittel sind chemische oder natürliche Substanzen, die in Pflanzenzellen, -gewebe oder parasitären Organismen in oder auf der Pflanze eindringen und diese schädigen und/oder zerstören.

Den größten Anteil an Pestiziden stellen Herbizide dar, gefolgt von Insektiziden und Fungiziden.

Die wichtigsten Herbizide sind chemische Substanzen, die auf das Transportsystem von Pflanzen, beispielsweise durch eine Hemmung von Photosynthese, Fettsäurebiosynthese oder Aminosäurebiosynthese, einwirken und zur Hemmung von Keimbildung und Wachstum bis zum Absterben der Pflanze führen.

Bekannte Pestizide sind beispielsweise Herbizide der Substanzklasse N-Phosphonomethyl-glycin (Glyphosate). Glyphosate werden als sehr umweltverträgliche und gleichzeitig hochwirksame und breit einsetzbare Herbizide in der Agrarwirtschaft in großen Mengen eingesetzt. Sie werden vorzugsweise als wasserlösliche Salze, beispielsweise als Alkalimetall-, Ammonium-, Alkylamin-, Alkylsulfonium-, Alkylphosphonium, Sulfonylamin- oder Aminoguanidinsalz oder auch als freie Säure in wässrigen Formulierungen, aber auch in fester Form mit Netzmitteln auf Blätter und Gräser aufgebracht, wo sie auf das Transportsystem der Pflanze einwirken und diese vernichten.

Die biologische Aktivität eines Pestizides kann anhand des Pflanzenwachstums bzw. der Schädigung der Pflanzen durch die Einwirkung des Wirkstoffes auf das Blatt oder über die Wurzeln in Abhängigkeit von der Wirkzeit und der Wirkkonzentration bestimmt werden. Ein generelles Problem ist, dass nur ein Bruchteil des Wirkstoffes die gewünschte Aktivität entfaltet; der bei weitem größte Teil geht ungenutzt verloren.

Dieser ökologische und ökonomische Nachteil kann durch Zugabe von oberflächenaktiven Hilfsstoffen (Adjuvants) zu Pestizid-Formulierungen reduziert werden.

Eine Verbesserung der Wirkung anionischer Pestizide kann, wie in WO 99/05914 beschrieben, dadurch erreicht werden, dass die anionische Wirksubstanz zusammen mit protonierten Polyaminen oder deren Derivaten als wässrige kolloidale Dispersion formuliert wird.

US 5,750,468 lehrt, dass man die Konzentration von Glyphosat ohne Verminderung der biologischen Aktivität reduzieren kann, wenn man der Formulierung tertiäre oder quarternäre Etheramine zusetzt.

In US 5,616,811 werden alkoxylierte primäre Etheramine beansprucht und deren benetzende, emulgierende und tensidische Eigenschaften ausgelobt.

Dennoch ist man bestrebt, neue Zusammensetzungen oder Formulierungen von Pestiziden mit verbesserter Wirksamkeit zu entwickeln, die gleichzeitig wirtschaftlich, einfach zu handhaben und für Mensch und Umwelt gut verträglich sind.

Überraschenderweise kann die Aufgabe dadurch gelöst werden, dass die Pestizid-Zusammensetzung neben dem Pestizid auch bestimmte alkoxylierte Amine enthält.

Gegenstand der Erfindung sind Zusammensetzungen enthaltend
a) ein oder mehrere Pestizide und
b) ein oder mehrere Verbindungen ausgewählt aus Formel 1

   R-N{(A¹O)ᵣH}-(CH₂)₃-N{(A²O)ₛH}-[(CH₂)₃-{N(A³O)ₜH}]ₓ-(A⁴O)ᵤH (I)

   worin
   - R: für einen linearen oder verzweigten Alkyl- oder Alkenylrest mit 6 bis 30 C-Atomen, bevorzugt 8 bis 19 C-Atomen, besonders bevorzugt für einen Talgfettrest steht,
   - A¹ bis A⁴: jeweils unabhängig voneinander eine Gruppe der Formeln -C₂H₄- oder -C₃H₆- sind,
   - r, s, t und u: jeweils unabhängig voneinander eine Zahl von 1 bis 400 bedeuten, die Summe der Zahlen r, s, t und u Werte von 10 bis 600, insbesondere von 100 bis 400 annimmt, und
   - x: eine Zahl von 1 bis 10 ist.

Im Rahmen der vorliegenden Erfindung umfassen die Verbindungen der Formel I vor- und nachstehend auch die Derivate, in denen ein oder mehrere N-Atome kein freies Elektronenpaar besitzen, sondern in denen an diese N-Atome ein vierter Rest Q gebunden ist, welcher aus H und linearen oder verzweigten Alkylgruppen mit 1 bis 6 C-Atomen, insbesondere H oder Methyl, ausgewählt ist. Innerhalb einer Verbindung können an verschiedene N-Atome verschiedene Reste Q gebunden sein. In den Verbindungen, die einen oder mehrere dieser Reste Q enthalten, tragen die N-Atome, an die die Reste Q gebunden sind, eine positive Ladung. Entsprechende Gegenionen P können ausgewählt sein aus Chlorid, Bromid, Iodid, Fluorid, Sulfat, Hydrogensulfat, Carbonat, Hydrogencarbonat, Phosphat, Mono-und Di-Hydrogenphosphat, Pyrophosphat, Metaphosphat, Nitrat, Methylsulfat, Phosphonat, Methylphosphonat, Methandisulfonat, Methylsulfonat, Ethansulfonat oder aus anionischen Resten der Formeln R⁶SO₃^{⊖}, R⁷SO₄^{⊖} oder R⁶COO^{⊖} worin R⁶ und R⁷ lineares oder verzweigtes C₈-C₂₀-, vorzugsweise C₁₀-C₁₈-Alkyl, und R⁷ zusätzlich auch C₇-C₁₈-Alkylphenyl bedeuten. Diese Struktureinheit wird im folgenden vereinfacht durch die Schreibweise {QP} wiedergegeben.

Die entsprechenden Derivate der Verbindungen der Formen I können demzufolge vereinfacht z.B. wie folgt durch Formel la beschrieben werden.

R-N{Q¹P¹}{(A¹O)ᵣH}-(CH₂)₃-N{Q²P²}{(A²O)ₛH}-[(CH₂)₃-N{Q³P³}{(A³O)ₜH}]ₓ-(A⁴O)ᵤH (Ia)

worin
- R, A¹ bis A⁴, r, s, t, u und x: die oben angegebenen Bedeutungen besitzen,
- Q¹, Q² und Q³: jeweils unabhängig voneinander H oder eine lineare oder verzweigte Akylgruppe mit 1 bis 6 C-Atomen sind und
- P¹, P² und P³: jeweils unabhängig voneinander ausgewählt sind aus Chlorid, Bromid, Iodid, Fluorid, Sulfat, Hydrogensulfat, Carbonat, Hydrogencarbonat, Phosphat, Mono- und Di-Hydrogenphosphat, Pyrophosphat, Metaphosphat, Nitrat, Methylsulfat, Phosphonat, Methylphosphonat, Methandisulfonat, Methylsulfonat, Ethansulfonat oder aus anionischen Verbindungen der Formeln R⁶SO₃^{⊖}, R⁷SO₄^{⊖} oder R⁶COO^{⊖} worin R⁶ und R⁷ lineares oder verzweigtes C₈-C₂₀-, vorzugsweise C₁₀-C₁₈-Alkyl, und R⁷ zusätzlich auch C₇-C₁₈-Alkylphenyl bedeuten.

Als bevorzugte Reste P seien z.B. Laurylsulfat und Cumolsulfat genannt.

In den Verbindungen der Formel I bedeuten die Reste R vorzugsweise einen Kokosfettrest oder einen Talgfettrest.

Unter den alkoxylierten Aminen gemäß Formel I sind solche bevorzugt, worin
- R -: ein Alkylrest mit 8 bis 19 C-Atomen, insbesondere ein Talgfettrest, ist,
- A¹ bis A⁴: jeweils unabhängig voneinander eine Gruppe der Formeln -C₂H₄- oder -C₃H₆- sind,
- r, s, t und u: jeweils unabhängig voneinander eine Zahl von 1 bis 400 bedeuten, die Summe der Zahlen r, s, t und u Werte von 10 bis 600, insbesondere von 100 bis 400 und besonders bevorzugt von 250 bis 350 annimmt, und
- x: 1 oder 2 bedeutet.

In den alkoxylierten Aminen der Formel I sind die Polyalkoxygruppen Polyethoxy-oder Polypropoxy- oder Ethylenoxid/Propylenoxid (EO/PO)-Blockcopolymere oder EO/PO-Random-Copolymere. Innerhalb einer Kette können 1 bis 400 EO- bzw. PO- bzw. EO/PO-Einheiten in statistischer Verteilung vorkommen. Insgesamt kann die Verbindung der Formel I 10 bis 600, bevorzugt 100 bis 400 und besonders bevorzugt 250 bis 350 EO- bzw PO- bzw. EO/PO-Einheiten enthalten.

Überraschenderweise lassen sich mit alkoxylierten Aminen gemäß Formel I sowohl feste als auch flüssige Pestizidformulierungen mit ausgezeichnetem Löslichkeitsverhalten in Wasser herstellen. Ein weiterer anwendungstechnischer Vorteil ist die hohe Phasenstabilität hochkonzentrierter wässriger Formulierungen aus anionischen Pestiziden, insbesondere Glyphosaten in Salzform, gegebenenfalls agrochemischen Salzen und alkoxyliertem Amin gemäß Formel I.

Ein Auskristallisieren der ionischen Komponenten bei der Zugabe von alkoxyliertem Amin erfolgt auch bei längerer Lagerzeit nicht.

Neben der hohen Elektrolytstabilität zeigt das erfindungsgemäß eingesetzte Adjuvant eine Verbesserung der Kompatibilität und eine Verbesserung der biologischen Aktivität des Wirkstoffes in den Pflanzen.

Die erfindungsgemäß als Adjuvants in Pestizidformulierungen eingesetzten alkoxylierten Amine gemäß der Formel I werden in einer mehrstufigen Synthese hergestellt, beispielsweise wie folgt.

Primäres Alkylamin, beispielsweise Kokosamin oder Talgfettamin, wird mit oder ohne Katalysator unter N₂ vorgelegt und bei einer Temperatur von 40°C bis 90°C Acrylnitril innerhalb von 1 bis 2 Stunden zudosiert, wobei das Molverhältnis Amin zu Nitril von 1 zu 0,95 bis 1 zu 1,20 beträgt. Die Reaktion ist exotherm. Nach beendeter Zugabe wird 2 bis 6 Stunden bei Reaktionstemperatur nachgerührt. Das entstandene Nitril wird zuerst mit verdünnter Natronlauge und dann mit Wasser gewaschen. Die Hydrierung des Nitrils geschieht nach Standardbedingungen (Schüttelautoklav) mit einem geeigneten Katalysator, z.B. Raney-Nickel, bei 70°C bis 120°C in Anwesenheit von Ammoniak und einem Wasserstoffdruck von 150 bis 180 bar bis zur Druckkonstanz. Nach Filtration des Autoklaveninhaltes wird das erhaltene Amin im Wasserstrahlvakuum destilliert.

Zur Herstellung alkoxylierter Amine gemäß Formel I wird das Amin wiederum mit Acrylnitril in analoger Weise umgesetzt und hydriert. Das erhaltene Triamin kann beispielsweise durch weitere Umsetzung mit Acrylnitril und nachfolgender Hydrierung zum Tetramin umgesetzt werden etc.

Zur Alkoxylierung wird trockenes Polyamin unter N₂-Atmosphäre vorgelegt und in 2 Stufen ohne und mit einem geeigneten basischen Katalysator, z.B. NaOH bei 140 bis 200°C alkoxyliert. Dabei wird Ethylenoxid und/oder Propylenoxid schrittweise bis zum gewünschten Alkoxylierungsgrad (Aminzahl) addiert. Die Nachreaktion beträgt je nach Alkylenoxid 1 bis 3 Stunden.

Die entsprechenden Derivate der Verbindungen der Formel I, die Verbindungen der Formel la, in denen an ein oder mehrere N-Atome ein oder mehrere Reste Q gebunden sind, können z.B. aus den Verbindungen der Formel I nach Methoden, die dem Fachmann geläufig sind, hergestellt werden, beispielsweise durch entsprechende Umsetzung der Verbindungen der Formel I mit HCl oder Methylchlorid.

Erfindungsgemäß eignen sich die alkoxylierten Amine der Formel I als Adjuvant in Pestizidformulierung zur Verbesserung der biologischen Aktivität von Herbiziden, Insektiziden, Fungiziden, Akariziden, Bakteriziden, Molluskiden, Nematiziden und Rodentiziden. In einer bevorzugten Ausführungsform werden diese Verbindungen Herbizidformulierungen zugesetzt. Geeignete Herbizide sind, ohne die Erfindung auf diese einzuschränken, Acifluorfen, Asulam, Benazolin, Bentazone, Bilanafos, Bromacil, Bromoxynil, Chloramben, Clopyralid, 2,4-D, 2,4-DB, Dalapon, Dicamba, Dichlorprop, Diclofop, Endothall, Fenac, Fenoxaprop, Flamprop, Fluazifop, Flumiclorac, Fluoroglycofen, Fomesafen, Fosamine, Glufosinate, Haloxyfop, Imazapic, Imazamethabenz, Imazamox, Imazapyr, Imazaquin, Imazethapyr, loxynil, MCPA, MCPB, Mecoprop, Methylarsensäure, Naptalam, Picloram, Quinclorac, Quizalofop, 2,3,6-TBA, TCA.

Bevorzugte Pestizide sind Herbizide der Substanzklasse N-Phosphonomethyl-glycin (Glyphosate). Unter den Glyphosaten sind die freie Säure und insbesondere die wasserlöslichen Salze bevorzugt. Unter den wasserlöslichen Salzen sind wiederum die Alkalimetall-, Ammonium-, Alkylamin-, Alkylsulfonium-, Alkylphosphonium, Sulfonylamin- und Aminoguanidinsalze bevorzugt. Hierbei bedeutet "Alkylamin" besonders bevorzugt "Isopropylamin".

Der Gehalt an Verbindungen der Formel I in den erfindungsgemäßen Pestizidzubereitungen kann innerhalb großer Grenzen variieren. Bevorzugt sind folgende Formulierungen.

Konzentrat-Formulierungen, die vor dem Gebrauch verdünnt werden ("ready-to-use"- oder "built-in"-Zusammensetzung), enthalten das Pestizid vorzugsweise in den Gewichtsmengen 5 bis 60 %, besonders bevorzugt 20 bis 40 % und Verbindungen der Formel I vorzugsweise in den Mengen von 5 bis 50 Gew.-%. Diese Mengenangaben beziehen sich auf die gesamte Konzentrat-Formulierung.

Alternativ können die erfindungsgemäßen Formulierungen in fester Form als Pulver, Pellets, Tabletten oder Granulate hergestellt werden, die vor dem Gebrauch in Wasser gelöst werden. Feste Zubereitungen enthalten das Pestizid vorzugsweise in den Gewichtsmengen von 20 bis 80 %, besonders bevorzugt von 50 bis 75 %, insbesondere bevorzugt von 60 bis 70 % und Verbindungen der Formel I vorzugsweise in den Gewichtsmengen von 5 bis 80 %, besonders bevorzugt von 30 bis 60 %. Diese Mengenangaben beziehen sich auf die gesamte feste Zubereitung.

Die Erfindung betrifft weiterhin die Verwendung
a) eines oder mehrerer Pestizide und
b) einer oder mehrerer Verbindungen ausgewählt aus Formel I

   R-N{(A¹O)ᵣH}-(CH₂)₃-N{(A²O)ₛH}-[(CH₂)₃-{N(A³O)ₜH}]ₓ-(A⁴O)ᵤH (I)

   worin
   - R: für einen linearen oder verzweigten Alkyl- oder Alkenylrest mit 6 bis 30 C-Atomen steht,
   - A¹ bis A⁴: jeweils unabhängig voneinander eine Gruppe der Formeln -C₂H₄- oder -C₃H₆- sind,
   - r, s, t und u: jeweils unabhängig voneinander eine Zahl von 1 bis 400 bedeuten, die Summe der Zahlen r, s, t und u Werte von 10 bis 600 annimmt,
   und
   - x: eine Zahl von 1 bis 10 ist,
   und wobei die Verbindungen der Formel I auch solche Derivate umfassen, in denen an ein oder mehrere N-Atome ein vierter Rest gebunden ist, der aus H und linearen oder verzweigten Alkylgruppen mit 1 bis 6 C-Atomen ausgewählt ist und die Gegenionen dieser Derivate ausgewählt sind aus Chlorid, Bromid, lodid, Fluorid, Sulfat, Hydrogensulfat, Carbonat, Hydrogencarbonat, Phosphat, Mono- und Di-Hydrogenphosphat, Pyrophosphat, Metaphosphat, Nitrat, Methylsulfat, Phosphonat, Methylphosphonat, Methandisulfonat, Methylsulfonat, Ethansulfonat oder aus anionischen Verbindungen der Formeln R⁶SO₃^{⊖}, R⁷SO₄^{⊖} oder R⁶COO^{⊖} worin R⁶ und R⁷ lineares oder verzweigtes C₈-C₂₀-, vorzugsweise C₁₀-C₁₈- Alkyl, und R⁷ zusätzlich auch C₇-C₁₈-Alkylphenyl bedeuten,
zur Kontrolle und/oder Bekämpfung von Unkraut.

Hierbei können das oder die Pestizide und die eine oder die mehreren Verbindungen der Formel I auch in Form einer sogenannten "Tank-mix"-Zusammensetzung vorliegen. In einer derartigen Zusammensetzung liegen sowohl das oder die Pestizide als auch die eine oder die mehreren Verbindungen der Formel I getrennt voneinander vor. Beide Zusammensetzungen werden vor der Ausbringung, in der Regel kurz vorher, miteinander vermischt. Im "Tank-mix"-Verfahren liegt das Pestizid vor der Vermischung bevorzugt in Wasser oder in einem organischen Lösungsmittel, z.B. in aromatischen oder aliphatischen Kohlenwasserstoffen wie Toluol, Xylol oder Solvesso, halogenierten Kohlenwasserstoffen wie Tetrachlormethan, Chloroform, Methylenchlorid oder Dichlorethan oder methylierten Ölen wie Methylestern des Soja- oder Rapsöls, vor. Im "Tank-mix"-Verfahren liegt die Verbindung der Formel I vor der Vermischung bevorzugt in Substanz oder in Wasser vor. In einer bevorzugten Ausführungsform liegen sowohl das oder die Pestizide als auch die eine oder die mehreren Verbindungen der Formel I in Wasser vor.

In der Spritzbrühe ist die Konzentration des oder der Pestizide vorzugsweise von 0,001 bis 10 Gew.-%, besonders bevorzugt von 0,025 bis 3 Gew.-% und insbesondere bevorzugt von 0,025 bis 2 Gew.-% bezogen auf die gesamte Spritzbrühe. Die Konzentration der einen oder der mehreren Verbindungen der Formel I in der Spritzbrühe ist vorzugsweise von 0,01 bis 10 Gew.-%, besonders bevorzugt von 0,1 bis 2 Gew.-% und insbesondere bevorzugt von 0,2 bis 1 Gew.-% bezogen auf die gesamte Spritzbrühe. Das Verhältnis Adjuvant zu Pestizid in der Spritzbrühe ist vorzugsweise von 1:10 bis 500:1, besonders bevorzugt von 1:4 bis 4:1.

Die erfindungsgemäßen Formulierungen können Verdickungsmittel, Antigelmittel, Frostmittel, Lösungsmittel, Dispergiermittel, Emulgatoren, Konservierungsmittel, weitere Adjuvants, Bindemittel, Antischaummittel, Verdünner, Sprengmittel und Netzmittel enthalten. Als Verdickungsmittel können Xanthan gum und/oder Cellulose, beispielsweise Carboxy-, Methyl-, Ethyl- oder Propylcellulose in den Gewichtsmengen von 0,01 bis 5 %, bezogen auf das fertige Mittel, eingesetzt werden. Als Lösungsmittel eignen sich Monopropylenglycol, tierische und mineralische Öle. Als Dispergiermittel und Emulgator eignen sich nichtionische, amphotere, kationische und anionische Tenside. Als Konservierungsmittel können organische Säuren und ihre Ester, beispielsweise Ascorbinsäure, Ascorbinpalmitat, Sorbat, Benzoesäure, Methyl- und Propyl-4-hydroxybenzoat, Propionate, Phenol, beispielsweise 2-Phenylphenat, 1,2-Benzisothiazolin-3-on, Formaldehyd, schwefelige Säure und deren Salze eingesetzt werden. Als Entschäumer eignen sich Polysilicone. Weitere Adjuvants können Polyglycerinester, Alkoholethoxylate, Alkylpolysacharide, Fettaminethoxylate, Sorbitan- und Sorbitolethoxylatderivate und Derivate der Alk(en)ylbernsteinsäureanhydrid sein. Das Mischungsverhältnis dieser Adjuvants zu den erfindungsgemäß eingesetzten alkoxylierten Aminen gemäß Formel I kann im Bereich von 1:10 bis 10:1 liegen. Für feste Formulierungen kommen als Bindemittel Polyvinylpyrrolidon, Polyvinylalkohol, Carboxymethylcellulose, Zucker, beispielsweise Sucrose, Sorbitol oder Stärke in Betracht. Als Verdünner, Absorber oder Träger eignen sich Carbon Black, Talg, Kaolin, Aluminium-, Calcium- oder Magnesiumstearat, Natriumtripolyphosphat, Natriumtetraborat, Natriumsulphat, Silikate und Natriumbenzoat. Als Sprengmittel wirken Cellulose, beispielsweise Carboxymethylcellulose, Polyvinylpyrrolidon, Natrium- oder Kaliumacetat, Carbonate, Bicarbonate, Sesquicarbonate, Ammoniumsulphat oder Kaliumhydrogenphosphat. Als Netzmittel können Alkoholethoxylate/-propoxylate verwendet werden.

Ein großer anwendungstechnischer Vorteil ist die hohe Salzstabilität der erfindungsgemäßen Pestizid-Formulierungen mit alkoxylierten Aminen gemäß Formel I im wässrigen Medium auch bei hoher Pestizid-Konzentration.
In einer besonders bevorzugten Ausführungsform enthalten die erfindungsgemäßen Pestizidzubereitungen neben dem Wirkstoff und einem oder mehreren alkoxylierten Aminen gemäß Formel I agrochemische Salze, bevorzugt Ammoniumsalze, besonders bevorzugt Ammoniumsulfat, Ammoniumnitrat, Ammoniumphosphat, Ammoniumthiocyanat und/oder Ammoniumchlorid.

Die erfindungsgemäßen Formulierungen können nach den üblichen Methoden angewandt werden. Wässrige Konzentrate und feste Formulierungen werden vor dem Ausbringen mit der entsprechenden Menge an Wasser verdünnt.
Pro Hektar werden Pestizidmengen im Bereich von 0,1 bis 5 kg, bevorzugt 0,3 bis 2,5 kg ausgebracht. Der Anteil des erfindungsgemäßen Adjuvant liegt im Bereich von 0,002 bis ca. 1,0 kg/ha. Das Volumen der für die Aussprühung erstellten Pestizidformulierung liegt bevorzugt im Bereich von 50 bis 1000 I/ha, kann aber für spezielle Ausbringungsmethoden, beispielsweise für "control droplet application", auch 10 bis 50 I/ha sein.

## Patentansprüche

1. Zusammensetzung enthaltend
a) ein oder mehrere Pestizide und
b) eine oder mehrere Verbindungen ausgewählt aus Formel I R-N{(A¹O)ᵣH}-(CH₂)₃-N{(A²O)ₛH}-[(CH₂)₃-{N(A³O)ₜH}]ₓ-(A⁴O)ᵤH (I) worin
R für einen linearen oder verzweigten Alkyl- oder Alkenylrest mit 6 bis 30 C-Atomen steht,
A¹ bis A⁴ jeweils unabhängig voneinander eine Gruppe der Formeln -C₂H₄- oder -C₃H₆- sind,
r, s, t und u jeweils unabhängig voneinander eine Zahl von 1 bis 400 bedeuten, die Summe der Zahlen r, s, t und u Werte von 10 bis 600 annimmt, und
x eine Zahl von 1 bis 10 ist,
und wobei die Verbindungen der Formel I auch solche Derivate umfassen, in denen an ein oder mehrere N-Atome ein vierter Rest gebunden ist, der aus H und linearen oder verzweigten Alkylgruppen mit 1 bis 6 C-Atomen ausgewählt ist und die Gegenionen dieser Derivate ausgewählt sind aus Chlorid, Bromid, Iodid, Fluorid, Sulfat, Hydrogensulfat, Carbonat, Hydrogencarbonat, Phosphat, Mono- und Di-Hydrogenphosphat, Pyrophosphat, Metaphosphat, Nitrat, Methylsulfat, Phosphonat, Methylphosphonat, Methandisulfonat, Methylsulfonat, Ethansulfonat oder aus anionischen Verbindungen der Formeln R⁶SO₃^{⊖}, R⁷SO₄^{⊖} oder R⁶COO^{⊖} worin R⁶ und R⁷ lineares oder verzweigtes C₈-C₂₀-Alkyl, und R⁷ zusätzlich auch C₇-C₁₈-Alkylphenyl bedeuten.

2. Zusammensetzung gemäß Anspruch 1, **dadurch gekennzeichnet, dass** das oder die Pestizide ausgewählt sind aus der Substanzklasse N-Phosphonomethyl-glycin (Glyphosat).

3. Zusammensetzung gemäß Anspruch 2, **dadurch gekennzeichnet, dass** Glyphosat als freie Säure oder als Alkalimetall-, Ammonium-, Alkylamin-, Alkylsulfonium-, Alkylphosphonium, Sulfonylamin- oder Aminoguanidinsalz vorliegt.

4. Zusammensetzung gemäß einem oder mehreren der Ansprüche 1 bis 3, **dadurch gekennzeichnet, dass** sie Verbindungen der Formel I enthält, worin
R ein Alkylrest mit 8 bis 19 C-Atomen ist,
A¹ bis A⁴ jeweils unabhängig voneinander eine Gruppe der Formeln -C₂H₄- oder -C₃H₆- sind,
r, s, t und u jeweils unabhängig voneinander eine Zahl von 1 bis 400 bedeuten, die Summe der Zahlen r, s, t und u Werte von 10 bis 600 annimmt, und
x 1 oder 2 bedeutet.

5. Zusammensetzung gemäß einem oder mehreren der Ansprüche 1 bis 4, **dadurch gekennzeichnet, dass** R ein Talgfettrest ist.

6. Zusammensetzung gemäß einem oder mehreren der Ansprüche 1 bis 5, **dadurch gekennzeichnet, dass** sie als eine vor dem Gebrauch zu verdünnende Konzentrat-Formulierung vorliegt und 5 bis 60 Gew.-% Pestizid und 5 bis 50 Gew.-% einer oder mehrerer Verbindungen der Formel enthalt.

7. Zusammensetzung gemäß einem oder mehreren der Ansprüche 1 bis 5, **dadurch gekennzeichnet, dass** sie als eine vor dem Gebrauch in Wasser zu lösende feste Formulierung vorliegt und 20 bis 80 Gew.-% Pestizid und 5 bis 80 Gew.-% einer oder mehrerer Verbindungen der Formel I enthalt.

8. Zusammensetzung gemäß einem oder mehreren der Ansprüche 1 bis 5, **dadurch gekennzeichnet, dass** sie als Spritzbrühe vorliegt und 0,001 bis 10 Gew.-% Pestizid und 0,01 bis 10 Gew.-% einer oder mehrerer Verbindungen der Formel I enthält.

9. Zusammensetzung gemäß einem oder mehreren der Ansprüche 1 bis 8, **dadurch gekennzeichnet, dass** sie agrochemische Salze, vorzugsweise Ammoniumsalze, enthält.

10. Zusammensetzung gemäß Anspruch 9, **dadurch gekennzeichnet, dass** die agrochemischen Salze ausgewählt sind aus Ammoniumsulfat, Ammoniumnitrat, Ammoniumphosphat, Ammoniumthiocyanat und/oder Ammoniumchlorid.

11. Verwendung
a) eines oder mehrerer Pestizide und
b) einer oder mehrerer Verbindungen ausgewählt aus Formel I
R-N{(A¹O)ᵣH}-(CH₂)₃-N{(A²O)ₛH}-[(CH₂)₃-{N(A³O)ₜH}]ₓ-(A⁴O)ᵤH (I)
worin
R für einen linearen oder verzweigten Alkyl- oder Alkenylrest mit 6 bis 30 C-Atomen steht,
A¹ bis A⁴ jeweils unabhängig voneinander eine Gruppe der Formeln -C₂H₄- oder -C₃H₆- sind,
r, s, t und u jeweils unabhängig voneinander eine Zahl von 1 bis 400 bedeuten,
die Summe der Zahlen r, s, t und u Werte von 10 bis 600 annimmt, und
x eine Zahl von 1 bis 10 ist,
und wobei die Verbindungen der Formel I auch solche Derivate umfassen, in denen an ein oder mehrere N-Atome ein vierter Rest gebunden ist, der aus H und linearen oder verzweigten Alkylgruppen mit 1 bis 6 C-Atomen ausgewählt ist und die Gegenionen dieser Derivate ausgewählt sind aus Chlorid, Bromid, Iodid, Fluorid, Sulfat, Hydrogensulfat, Carbonat, Hydrogencarbonat, Phosphat, Mono- und Di-Hydrogenphosphat, Pyrophosphat, Metaphosphat, Nitrat, Methylsulfat, Phosphonat, Methylphosphonat, Methandisulfonat, Methylsulfonat, Ethansulfonat oder aus anionischen Verbindungen der Formeln R⁶SO₃^{⊖}, R⁷SO₄^{⊖} oder R⁶COO^{⊖} worin R⁶ und R⁷ lineares oder verzweigtes C₈-C₂₀-Alkyl, und R⁷ zusätzlich auch C₇-C₁₈-Alkylphenyl bedeuten,
zur Kontrolle und/oder Bekämpfung von Unkraut.

12. Verwendung gemäß Anspruch 11 im Tank-mix-Verfahren.

13. Verwendung gemäß Anspruch 11, **dadurch gekennzeichnet, dass** das oder die Pestizide in Wasser oder einem organischen Lösungsmittel vorliegen und die Verbindung oder die Verbindungen gemäß Formel I in Substanz oder Wasser vorliegen und die genannten Substanzen vor der Ausbringung miteinander vermischt werden.

14. Verwendung gemäß Anspruch 13, **dadurch gekennzeichnet, dass** das oder die Pestizide und die eine oder die mehreren Verbindungen gemäß Formel I in Wasser vorliegen.

## Claims

1. A composition comprising
a) one or more pesticides and
b) one or more compounds selected from formula I
R-N{(A¹O)ᵣH}-(CH₂)₃-N{(A²O)ₛH}-[(CH₂)₃-N{(A³O)ₜH}]ₓ-(A⁴O)ᵤH (I)
in which
R is a linear or branched alkyl or alkenyl residue with 6 to 30 carbon atoms,
A¹ to A⁴ are, in each case independently of one another, a group of the formula -C₂H₄- or -C₃H₆-,
r, s, t and u are, in each case independently of one another, a number from 1 to 400, the sum of the numbers r, s, t and u has values from 10 to 600, and
x is a number from 1 to 10,
the compounds of the formula I also including those derivatives in which a fourth residue is bonded to one or more nitrogen atoms, which residue is chosen from H and linear or branched alkyl groups with 1 to 6 carbon atoms, and the counterions of these derivatives are chosen from chloride, bromide, iodide, fluoride, sulfate, hydrogensulfate, carbonate, hydrogencarbonate, phosphate, mono- and dihydrogenphosphate, pyrophosphate, metaphosphate, nitrate, methyl sulfate, phosphonate, methylphosphonate, methanedisulfonate, methanesulfonate, or ethanesulfonate, or from anionic compounds of the formula R⁶SO₃⁻ and R⁷SO₄⁻ or R⁶COO⁻ in which R⁶ and R⁷ are linear or branched C₈-C₂₀ alkyl, and R⁷ is, in addition, also C₇-C₁₈ alkylphenyl.

2. A composition as claimed in claim 1, wherein the pesticide or pesticides are chosen from the N-(phosphonomethyl)glycine (glyphosate) class of substances.

3. A composition as claimed in claim 2, wherein glyphosate is present as free acid or as alkali metal, ammonium, alkylamine, alkylsulfonium, alkylphosphonium, sulfonylamine or aminoguanidine salt.

4. A composition as claimed in one or more of claims 1 to 3, which comprises compounds of the formula I in which
R is an alkyl residue with 8 to 19 carbon atoms,
A¹ to A⁴ n are, in each case independently of one another, a group of the formula -C₂H₄- or -C₃H₆-,
r, s, t and u are, in each case independently of one another, a number from 1 to 400, the sum of the numbers r, s, t and u has values from 10 to 600, and
x is 1 or 2.

5. A composition as claimed in one or more of claims 1 to 4, wherein R is a tallow fatty residue.

6. A composition as claimed in one or more of claims 1 to 5, which exists as a concentrate formulation to be diluted before use and comprises 5 to 60 weight% of pesticide and 5 to 50 weight% of one or more compounds of the formula I.

7. A composition as claimed in one or more of claims 1 to 5, which exists as a solid formulation to be dissolved in water before use and comprises 20 to 80 weight% of pesticide and 5 to 80 weight% of one or more compounds of the formula I.

8. A composition as claimed in one or more of claims 1 to 5, which exists as a spray mixture and comprises 0.001 to 10 weight% of pesticide and 0.01 to 10 weight% of one or more compounds of the formula I.

9. A composition as claimed in one or more of claims 1 to 8, which comprises agrochemical salts, preferably ammonium salts.

10. A composition as claimed in claim 9, wherein the agrochemical salts are chosen from ammonium sulfate, ammonium nitrate, ammonium phosphate, ammonium thiocyanate and/or ammonium chloride.

11. Use of
a) one or more pesticides and
b) one or more compounds selected from formula I
R-N{(A¹O)ᵣH}-(CH₂)₃-N{(A²O)ₛH}-[(CH₂)₃-{N(A³O)ₜH}]ₓ-(A⁴O)ᵤH (I)
in which
R is a linear or branched alkyl or alkenyl residue with 6 to 30 carbon atoms,
A¹ to A⁴ are, in each case independently of one another, a group of the formula -C₂H₄- or -C₃H₆-,
r, s, t and u are, in each case independently of one another, a number from 1 to 400, the sum of the numbers r, s, t and u has values from 10 to 600, and
x is a number from 1 to 10,
the compounds of the formula I also including those derivatives in which a fourth residue is bonded to one or more nitrogen atoms, which residue is chosen from H and linear or branched alkyl groups with 1 to 6 carbon atoms, and the counterions of these derivatives are chosen from chloride, bromide, iodide, fluoride, sulfate, hydrogensulfate, carbonate, hydrogencarbonate, phosphate, mono- and dihydrogenphosphate, pyrophosphate, metaphosphate, nitrate, methyl sulfate, phosphonate, methylphosphonate, methanedisulfonate, methanesulfonate, or ethanesulfonate, or from anionic compounds of the formula R⁶SO₃⁻ and R⁷SO₄⁻ or R⁶COO⁻ in which R⁶ and R⁷ are linear or branched C₈-C₂₀ alkyl, and R⁷ is, in addition, also C₇-C₁₈ alkylphenyl,
in controlling and/or combating weeds.

12. The use as claimed in claim 11 in the tank-mix process.

13. The use as claimed in claim 11, wherein the pesticide or pesticides are present in water or an organic solvent and the compound or the compounds according to formula I are present without solvent or in water and the abovementioned substances are mixed with one another before application.

14. The use as claimed in claim 13, wherein the pesticide or pesticides and the one or more compounds according to formula I are present in water.

## Revendications

1. Composition contenant
a) un ou plusieurs pesticides et
b) un ou plusieurs composés choisis parmi la formule 1
R-N{(A¹O)ᵣH}-(CH₂)₃-N{(A²O)ₛH}-[(CH₂)₃-{N(A³O)ₜH}]ₓ-(A⁴O)ᵤH (I)
où
R représente un radical alkyle ou alcényle linéaire ou ramifié comprenant 6 à 30 atomes de carbone,
A¹ à A⁴ représentent à chaque fois indépendamment l'un de l'autre un groupe des formules -C₂H₄- ou -C₃H₆-,
r, s, t et u représentent, à chaque fois indépendamment l'un de l'autre, un nombre de 1 à 400, la somme des nombres r, s, t et u vaut 10 à 600, et
x vaut un nombre de 1 à 10,
et où les composés de formule I comprennent également des dérivés dans lesquels sur un ou plusieurs atomes de N est lié un quatrième radical qui est choisi parmi H et les groupes alkyle linéaires ou ramifiés comprenant 1 à 6 atomes de carbone et les contre-ions de ces dérivés sont choisis parmi chlorure, bromure, iodure, fluorure, sulfate, hydrogénosulfate, carbonate, hydrogénocarbonate, phosphate, monohydrogénophosphate et dihydrogénophosphate, pyrophosphate, métaphosphate, nitrate, méthylsulfate, phosphonate, méthylphosphonate, méthanedisulfonate, méthylsulfonate, éthanesulfonate ou parmi les composés anioniques des formules R⁶SO₃⁻, R⁷SO₄⁻ ou R⁶COO⁻ où R⁶ et R⁷ signifient C₈-C₂₀-alkyle linéaire ou ramifié, et R⁷ signifie en outre également C₇-C₁₈-alkylphényle.

2. Composition selon la revendication 1, **caractérisée en ce que** le ou les pesticides sont choisis dans la classe des substances de la N-phosphonométhylglycine (Glyphosates).

3. Composition selon la revendication 2, **caractérisée en ce que** le glyphosate se trouve sous forme d'acide libre ou sous forme de sel de métal alcalin, d'ammonium, d'alkylamine, d'alkylsulfonium, d'alkylphosphonium, de sulfonylamine et d'aminoguanidine.

4. Composition selon l'une ou plusieurs des revendications 1 à 3, **caractérisée en ce qu'**elle contient des composés de formule I, où
R représente un radical alkyle comprenant 8 à 19 atomes de carbone
A¹ à A⁴ représentent à chaque fois indépendamment l'un de l'autre un groupe des formules -C₂H₄- ou -C₃H₆-,
r, s, t et u représentent, à chaque fois indépendamment l'un de l'autre, un nombre de 1 à 400, la somme des nombres r, s, t et u vaut 10 à 600, et
x signifie 1 ou 2.

5. Composition selon l'une ou plusieurs des revendications 1 à 4, **caractérisée en ce que** R représente un radical de graisse de suif.

6. Composition selon l'une ou plusieurs des revendications 1 à 5, **caractérisée en ce qu'**elle se trouve sous forme d'une formulation de concentrat à diluer avant l'utilisation et contient 5 à 60% en poids de pesticide et 5 à 50% en poids d'un ou de plusieurs composés de formule I.

7. Composition selon l'une ou plusieurs des revendications 1 à 5, **caractérisée en ce qu'**elle se trouve sous forme d'une formulation solide à dissoudre dans l'eau avant l'utilisation et contient 20 à 80% en poids de pesticide et 5 à 80% en poids d'un ou de plusieurs composés de formule I.

8. Composition selon l'une ou plusieurs des revendications 1 à 5, **caractérisée en ce qu'**elle se trouve sous forme de bouillon de pulvérisation et contient 0,001 à 10% en poids de pesticide et 0,01 à 10% en poids d'un ou de plusieurs composés de formule I.

9. Composition selon l'une ou plusieurs des revendications 1 à 8, **caractérisée en ce qu'**elle contient des sels agrochimiques, de préférence des sels d'ammonium.

10. Composition selon la revendication 9, **caractérisée en ce que** les sels agrochimiques sont choisis parmi le sulfate d'ammonium, le nitrate d'ammonium, le phosphate d'ammonium, le thiocyanate d'ammonium et/ou le chlorure d'ammonium.

11. Utilisation
a) d'un ou de plusieurs pesticides et
b) d'un ou de plusieurs composés choisis parmi la formule I
R-N{(A¹O)ᵣH}-(CH₂)₃-N{(A²O)ₛH}-[(CH₂)₃-N{(A³O)ₜH}]ₓ-(A⁴O)ᵤH (I)
où
R représente un radical alkyle ou alcényle linéaire ou ramifié comprenant 6 à 30 atomes de carbone,
A¹ à A⁴ représentent à chaque fois indépendamment l'un de l'autre un groupe des formules -C₂H₄- ou -C₃H₆-,
r, s, t et u représentent, à chaque fois indépendamment l'un de l'autre, un nombre de 1 à 400, la somme des nombres r, s, t et u vaut 10 à 600, et
x vaut un nombre de 1 à 10, et où les composés de formule I comprennent également des dérivés dans lesquels sur un ou plusieurs atomes de N est lié un quatrième radical qui est choisi parmi H et les groupes alkyle linéaires ou ramifiés comprenant 1 à 6 atomes de carbone et les contre-ions de ces dérivés sont choisis parmi chlorure, bromure, iodure, fluorure, sulfate, hydrogénosulfate, carbonate, hydrogénocarbonate, phosphate, monohydrogénophosphate et dihydrogénophosphate, pyrophosphate, métaphosphate, nitrate, méthylsulfate, phosphonate, méthylphosphonate, méthanedisulfonate, méthylsulfonate, éthanesulfonate ou parmi les composés anioniques des formules R⁶SO₃⁻, R⁷SO₄⁻ ou R⁶COO⁻ où R⁶ et R⁷ signifient C₈-C₂₀-alkyle linéaire ou ramifié, et R⁷ signifie en outre également C₇-C₁₈-alkylphényle,
pour le contrôle et/ou la lutte contre les mauvaises herbes.

12. Utilisation selon la revendication 11 dans un procédé "Tank-mix" (mélange dans une citerne).

13. Utilisation selon la revendication 11, **caractérisée en ce que** le ou les pesticides se trouvent dans l'eau ou dans un solvant organique et le ou les composés selon la formule I se trouvent en masse ou dans l'eau et les substances mentionnées sont mélangées les unes avec les autres avant la pulvérisation.

14. Utilisation selon la revendication 13, **caractérisée en ce que** le ou les pesticides et ledit un ou lesdits plusieurs composés selon la formule I se trouvent dans l'eau.
